# EUROPÄISCHE PATENTANMELDUNG

(11) **EP 1 424 153 A1**
(43) Veröffentlichungstag der Anmeldung: **02.06.2004**
(21) Anmeldenummer: 03022795.3
(22) Anmeldetag: 11.10.2003
(51) Int. Cl.: B23B 47/28

(54) **Dübellehre**

(30) Priorität: 26.11.2002 DE 10254976
(71) Anmelder: Pöckl, Ursula, 5322 Hof (AT)
(72) Erfinder: Pöckl, Ursula, 5322 Hof (AT)
(74) Vertreter: Haft, von Puttkamer, Berngruber, Czybulka

(57) **Zusammenfassung**

Eine Dübellehre besteht aus einem rechtwinkligen Winkelprofil (2) mit einem ersten Schenkel (3) und einem zweiten Schenkel (4), die jeweils mit einer Bohrung (5, 6) versehen sind, an der eine Bohrerführung (9) lösbar befestigbar ist. Neben jeder Bohrerführungsbohrung (5, 6) sind auf beiden Seiten Einsteckbohrungen (50, 51; 52, 53) vorgesehen, die mit ihrem Mittelpunkt und dem Mittelpunkt der zugehörigen Bohrerführungsbohrung (6, 7) auf einer Geraden liegen, die bei dem ersten Schenkel (3) parallel zu dessen Längskante (17) und bei dem zweiten Schenkel (4) parallel zur Winkelprofilkante (20) verläuft. In die Einsteckbohrungen (50, 51; 52, 53) kann ein Einsteckbolzen (54) gesteckt werden, der im eingesteckten Zustand an der Innenseite des Schenkels (3, 4) vorsteht.

## Beschreibung

Die Erfindung bezieht sich auf eine Dübellehre nach dem Oberbegriff des Anspruchs 1.

Eine derartige Dübellehre geht aus der deutschen Patentanmeldung 101 34 580.1 hervor. Die Dübellehre nach dieser deutschen Patentanmeldung besteht aus einem Winkelprofil mit zwei plattenförmigen senkrecht zueinander stehenden Schenkeln, die jeweils mit mindestens einer Bohrung versehen sind, an der eine Bohrerführung von außen lösbar befestigbar ist, wobei jeweils eine Skala an den Enden der beiden Schenkel und eine Skala an wenigstens einer Längsseite eines Schenkels vorgesehen ist.

Die Dübellehre hat sich zwar bewährt, sie verlangt jedoch ein konzentriertes Arbeiten. Wenn beispielsweise zwei Bretter T-förmig mit Dübeln verbunden werden, wird mit der Skala an dem ersten langen Schenkel der Abstand der Bohrlöcher für die Dübel festgelegt. Dazu muss jeweils die Lage der Bohrerführung und ein bestimmter Skalenwert in Übereinstimmung gebracht werden.

Aufgabe der Erfindung ist es, die Handhabung der Dübellehre nach der deutschen Patentanmeldung 101 34 580.1 zu vereinfachen.

Dies wird erfindungsgemäß dadurch erreicht, dass neben den Bohrerführungsbohrungen in den beiden plattenförmigen Schenkeln des Winkelprofils wenigstens eine Einsteckbohrung vorgesehen ist, welche mit ihrem Mittelpunkt und dem Mittelpunkt der Bohrerführungsbohrung auf einer Geraden liegt, die bei dem ersten Schenkel parallel zu dessen Längskante und bei dem zweiten Schenkel parallel zur Winkelprofilkante verläuft. In die Einsteckbohrung ist von außen ein Einsteckbolzen steckbar. Im eingesteckten Zustand steht er an der Innenseite des jeweiligen Schenkels vor. Der innen vorstehende Einsteckbolzen dient als Anschlag. Dazu liegt er entweder an einer Stirnfläche des Brettes an oder er greift in ein zuvor gebohrtes Dübelloch ein. Vorzugsweise ist der erste Schenkel länger ausgebildet als der zweite Schenkel.

Um mehrere Löcher für Dübel mit gleichem Abstand entlang einer Geraden zu bohren, beispielsweise um zwei Bretter zu verbinden, wird der Bolzen in die Einsteckbohrung gesteckt. Mit dem eingesteckten Bolzen im Anschlag an der Stirnfläche des Brettes weist die Bohrerführung einen vorgegebenen Abstand auf, um das erste Dübelloch zu bohren. Zum Bohren des zweiten Dübellochs wird der Bolzen herausgezogen und die Leere entlang der Geraden verschoben, bis der Bolzen in das erste Dübelloch gesteckt werden kann. Nach dem Bohren des zweiten Dübellochs kann das dritte und jedes weitere Dübelloch in gleicher Weise gebohrt werden. Auf das Ablesen einer Skala kann damit verzichtet werden.

Damit der Bohrer wieder herausgezogen werden kann, weist der Bolzen vorzugsweise einen Kopf auf, mit dem er an der Außenseite des Winkelprofils anschlägt. Der Durchmesser des Bolzens entspricht dem Durchmesser des Bohrers mit dem kleinsten Durchmesser, mit dem Dübellöcher gebohrt werden.

Mit der erfindungsgemäßen Dübellehre ist es also möglich, die Skalen, die bei der Dübellehre nach der deutschen Patentanmeldung 101 34 580.1 vorgesehen sind, wegzulassen.

Um die Löcher auch von der anderen Stirnfläche des Brettes in entgegengesetzter Richtung entlang der Geraden bohren zu können, ist vorzugsweise auf jeder Seite der beiden Bohrerführungsbohrungen jeweils eine Einsteckbohrung mit gleichem Abstand von der Bohrerführungsbohrung vorgesehen.

Die Bohrerführungsbohrung und die eine oder die beiden Einsteckbohrungen in dem ersten Schenkel weisen von dessen benachbarter Längskante einen Abstand auf, der dem Abstand zwischen der Ecke des Winkelprofils und der Bohrerführungsbohrung und der Einsteckbohrung bzw. den beiden Einsteckbohrungen in dem zweiten Schenkel entspricht.

Die Bohrerführungsbohrung in dem ersten Schenkel ist vorzugsweise in Längsrichtung in der Mitte zwischen der Winkelprofilkante und dem Ende des ersten Schenkels angeordnet. Demgegenüber ist die Bohrung in dem zweiten Schenkel vorzugsweise in Querrichtung in der Mitte angeordnet.

Die erfindungsgemäße Dübellehre ist zudem zum Bohren der Löcher für Korpusverbinder geeignet, die insbesondere für zerlegbare Möbel verwendet werden. Dazu muss mit einem Kunstbohrer ein Loch gebohrt werden, das senkrecht in das Loch mündet, in das ein Metallstift gesteckt wird.

Erfindungsgemäß ist dazu im ersten, also dem längeren Schenkel, eine Kunstbohrerführungsbohrung vorgesehen.

Das Loch für den Metallstift wird mit dem Bohrer gebohrt, der in die Bohrerführung in der Bohrung in dem zweiten kurzen Schenkel gesteckt wird. Das dazu senkrechte Loch wird mit dem Kunstbohrer mit Zentrierspitze gebohrt, der in der Kunstbohrerführungsbohrung in dem ersten Schenkel geführt wird.

Das Winkelprofil besteht vorzugsweise aus einem Aluminiumwerkstoff. Die Kunstbohrerführungsbohrung ist daher vorzugsweise mit einem härteren Werkstoff ausgekleidet, beispielsweise mit einem gehärteten Stahlring, der in die Bohrung eingelassen ist.

Vorzugsweise ist in dem ersten Schenkel eine schlitzförmige Öffnung mit einem Nullpunkt vorgesehen, der mit der Bohrung in dem zweiten Schenkel fluchtet. Die Öffnung ist dabei vorzugsweise an der dem zweiten Schenkel zugewandten Seite des ersten langen Schenkels angeordnet. Der Nullpunkt in dieser Öffnung in dem langen Schenkel der Dübellehre kann beispielsweise zum Bohren der Bohrlöcher für Eckverbindungen verwendet werden, beispielsweise eine Eckverbindung mit einer Gehrung z.B. für einen flachen Rahmen.

Die Bohrerführung kann durch eine Hülse gebildet sein. Zur lösbaren Befestigung der Bohrerführung kann sie mit einem Außengewinde zum Einschrauben in ein Innengewinde an der Bohrerführungsbohrung versehen sein. Vorzugsweise besteht die Bohrerführung aus Stahl.

Nachstehend ist eine Ausführungsform der erfindungsgemäßen Dübellehre anhand der Zeichnung beispielhaft näher erläutert. Darin zeigen in perspektivische Wiedergabe
Figur 1 die Dübellehre zum Bohren der Dübellöcher in die Stirnfläche eines Brettes A;
Figur 2a eine T-förmige Verbindung von zwei Brettern A und B; und
Figur 2b die Dübellehre an dem Brett B zum Bohren der Dübelbohrung für die Verbindung gemäß Figur 2a.

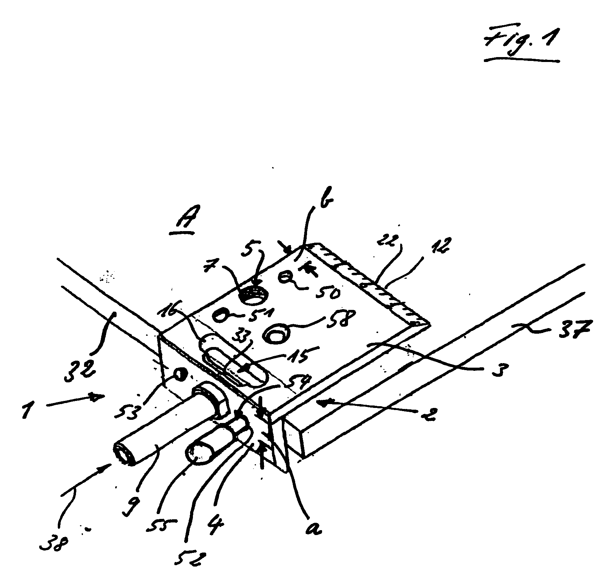

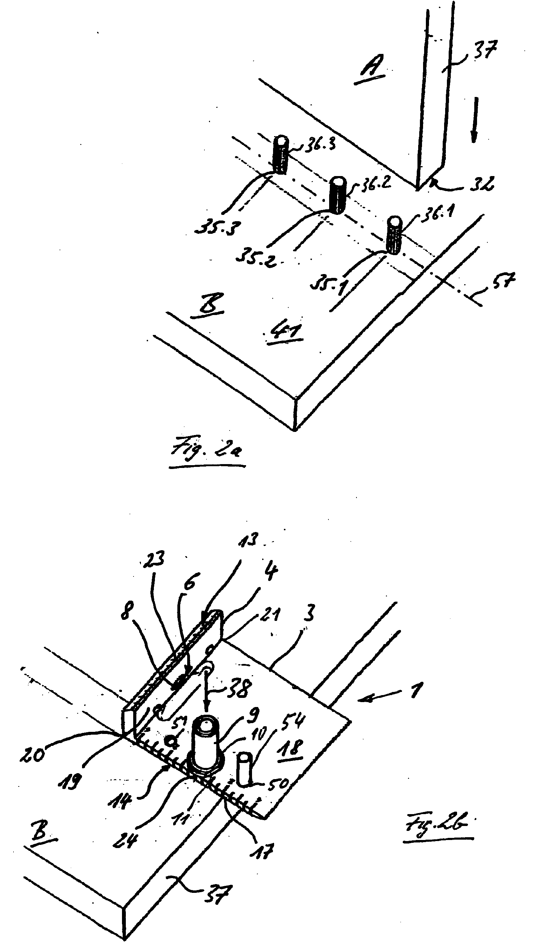

Die Dübellehre 1 besteht gemäß Figur 1 und 2b aus einem rechtwinkligen Winkelprofil 2 mit einem ersten plattenförmigen Schenkel 3 und einem zweiten dazu senkrechten plattenförmigen Schenkel 4. Der erste Schenkel 3 ist länger ausgebildet als der zweite Schenkel 4. Jeder Schenkel 3, 4 ist mit einer Bohrung 5, 6 versehen. Die Bohrungen 5, 6 weisen in Innengewinde 7, 8 auf. Eine mit einem Außengewinde versehene hülsenförmige Bohrerführung 9 ist wahlweise in die eine bzw. andere Bohrung 5, 6 einschraubbar. Die hülsenförmige Bohrerführung 9 ist mit einem ringförmigen Anschlag 10 versehen, der mit gegenüberliegenden tangentialen Flächen 11 für einen Schraubenschlüssel versehen ist.

Wie aus Figur 1 und 2b ersichtlich, weist das Winkelprofil vier Skalen auf. Die erste Skala 12 ist an dem freien Ende des ersten Schenkels 3 vorgesehen, die zweite Skala 13 an dem freien Ende des zweiten Schenkels 4, die dritte Skala 14 an der einen Längsseite des ersten Schenkels 3 und die vierte Skala 15 in einer Öffnung 16 im ersten Schenkel 3.

Die Bohrerführungsbohrung 5 in dem ersten Schenkel 3 weist von dessen Längskante 17 mit der dritten Skala 14 einen Abstand b auf, der dem Abstand a zwischen der Ecke 21 zwischen der Innenfläche 18 des ersten Schenkels und der Innenfläche 19 des zweiten Schenkels und der Bohrerführungsbohrung 6 in dem zweiten Schenkel 4 entspricht. Die Bohrerführungsbohrung 5 in dem ersten Schenkel 3 ist in Längsrichtung des ersten Schenkels 3 in der Mitte zwischen der Winkelprofilkante 20 und dem Ende des ersten Schenkels 3 mit der ersten Skala 12 angeordnet. Ebenso ist die Bohrerführungsbohrung 6 in Querrichtung in der Mitte des zweiten Schenkels 4 angeordnet.

Die Skalen 12, 13 an den Enden des ersten Schenkels 3 und des zweiten Schenkels 4 weisen in Querrichtung des Schenkels 3 bzw. 4 in der Mitte den Nullpunkt 22, 23 auf. Die Skala 14 an der Längskante 17 des ersten Schenkels 3 weist ihren Nullpunkt 24 in der Mitte zwischen der Winkelprofilkante 20 und dem Ende des ersten Schenkels 3 mit der Skala 12 auf.

Die Öffnung 16 in dem ersten Schenkel 3 weist an ihrem einen Längsrand einen Nullpunkt 33 der sich in Querrichtung erstreckenden Skala 15 auf, wobei der Nullpunkt 33 mit der Mitte der Bohrung 6 in dem zweiten Schenkel 4 fluchtet. Die Öffnung 16 ist dabei in dem dem zweiten Schenkel 4 zugewandten Ende des ersten Schenkels 3 angeordnet.

Zum Bohren von Dübellöchern in die Stirnfläche 32 des Brettes A wird die Bohrerführung 9 in die Bohrung 6 in dem kurzen Schenkel 4 der Dübellehre 1 geschraubt und dann das Dübelloch durch Einführen des nicht dargestellten Bohrers gemäß dem Pfeil 38 in die Bohrerführung 9 gebohrt.

Gemäß Figur 1 sind auf beiden Seiten der beiden Bohrerführungsbohrungen 5, 6 mit jeweils gleichem Abstand Endsteckbohrungen 50, 51; 52, 53 in dem ersten Schenkel 3 und dem zweiten Schenkel 4 vorgesehen. Der Mittelpunkt der Einsteckbohrungen 50, 51 in dem ersten Schenkel 3 und der Mittelpunkt der Bohrerführungsbohrung 5 liegen auf einer Geraden, die parallel zur Längskante 17 des ersten Schenkels 3 verläuft. Die Mittelpunkte der beiden Einsteckbohrungen 52, 53 und der Bohrerführungsbohrung 6 liegen ebenfalls auf einer Geraden, die parallel zur Winkelprofilkante 20 verläuft.

In die Einsteckbohrung 50 ist ein Einsteckbolzen 54 gesteckt, der mit seinem Ende auf der einen Seite des Schenkels 4 in ein zuvor gebohrtes (in Figur 1 nicht sichtbares) Dübelloch gesteckt wird.

Gemäß Figur 2a werden die Bretter A und B T-förmig mit Dübeln 36.1, 36.2 und 36.3 verbunden, die entlang einer Geraden 57 angeordnet sind. Dazu werden die Bohrlöcher 35.1, 35.2, 35.3 in die Fläche 41 des Teils B gebohrt, in das die Dübel 36.1, 36.2, 36.3 gesteckt werden. Ferner werden in die der Fläche 41 zugewandten Stirnseite 32 des Brettes A ebenfalls entlang einer Geraden Bohrlöcher gebohrt, wobei die Dübellehre 1 gemäß Figur 1 mit der Bohrerführung 9 in der Bohrung 6 angeordnet ist.

Zum Bohren der Löcher 35.1, 35.2, 35.3 mit gleichem Abstand entlang der Geraden 57 in das Brett B ist gemäß Figur 2b die Bohrerführung 9 in die Bohrung 5 in dem langen Schenkel 6 geschraubt. Dabei ist gemäß Figur 2b der Bolzen 54 in die Einsteckbohrung 52 gesteckt, um das erste Loch 35.1 zu bohren. Beim Bohren des ersten Lochs 35.1 dient der Bolzen 54 als Anschlag an der Stirnfläche 37 des Brettes B.

Zum Bohren des zweiten Lochs 35.2 wird der Bolzen 54 nach oben gezogen, worauf die Dübellehre 1 entlang der Geraden 57 verschoben wird, bis der Bolzen 54 in das erste Loch 35.1 gesteckt werden kann. Nach dem Bohren des zweiten Lochs 35.2 wird das dritte Loch 35.3 in gleicher Weise gebohrt wie das zweite Loch 35.2. Wenn die Löcher von der der Stirnfläche 37 gegenüberliegenden Stirnfläche des Brettes B gebohrt werden sollen, wird in gleicher Weise vorgegangen, nur dass der Bolzen 54 dann in die Bohrung 51 gesteckt wird.

Das Bohren der Löcher in die Stirnseite 32 des Brettes A erfolgt mit in die Bohrung 6 geschraubter Bohrerführung 9 und in die Einsteckbohrung 50 gestecktem Einsteckbolzen 54 analog, wie in Figur 1 dargestellt.

Der Einsteckbolzen 54 weist einen Kopf 55 zum Anschlag an der Außenseite der Schenkel 3, 4 auf, wenn er in die Einsteckbohrungen 50, 51, 52 bzw. 53 gesteckt ist. Um den Kopf 55 zu sehen, ist der Einsteckbolzen 54 in Figur 1 etwas herausgezogen dargestellt.

Die Dübellehre 1 kann auch zum Bohren der Löcher für Korpusverbinder verwendet werden, die insbesondere für zerlegbare Möbel eingesetzt werden. Dazu muss ein Loch gebohrt werden, das senkrecht in das Loch mündet, in das ein Metallstift gesteckt wird. Das senkrecht einmündende Loch wird mit einem Kunstbohrer mit Zentrierspitze gebohrt. Zum Bohren dieses Lochs ist in der Dübellehre 1 in dem ersten Schenkel 3 in Querrichtung in der Mitte eine Kunstbohrerführungsbohrung 58 vorgesehen, die nur in Figur 1 dargestellt ist.

Das Loch für den Metallstift wird mit der Bohrerführung 9 in der Bohrung 6 im kurzen Schenkel 4 in die Stirnfläche 32 des Brettes B gebohrt. Das dazu senkrechte Loch wird mit einem nicht dargestellten Kunstbohrer mit Zentrierspitze gebohrt, der in der Kunstbohrerbohrung 58 in dem langen Schenkel 3 geführt wird. Das Winkelprofil 2 besteht vorzugsweise aus einem Aluminiumwerkstoff. Die Kunstbohrerbohrung 58 ist dann mit einem harten Werkstoff ausgekleidet.

## Patentansprüche

1. Dübellehre aus einem Winkelprofil (2) mit einem ersten Schenkel (3) und einem zweiten dazu senkrechten Schenkel (4), die jeweils mit mindestens einer Bohrung (5, 6) versehen sind, an der eine Bohrerführung (9) von außen lösbar befestigbar ist, **dadurch gekennzeichnet, dass** neben den Bohrerführungsbohrungen (5, 6) wenigstens eine Einsteckbohrung (50, 51, 52, 53) vorgesehen ist, welche mit ihrem Mittelpunkt und dem Mittelpunkt der Bohrerführungsbohrung (5, 6) auf einer Geraden liegt, welche bei dem ersten Schenkel (2) parallel zu dessen Längskante (17) und bei dem zweiten Schenkel (4) parallel zur Winkelprofilkante (20) verläuft, wobei ein Einsteckbolzen (54) vorgehen ist, der in die Einsteckbohrung (50, 51, 52, 53) von außen steckbar ist und im eingesteckten Zustand an der Innenseite des Schenkels (3, 4) vorsteht.

2. Dübellehre nach Anspruch 1, **dadurch gekennzeichnet, dass** auf jeder Seite der Bohrerführungsbohrung (5, 6) eine Einsteckbohrung (50, 51; 52, 53) vorgesehen ist.

3. Dübellehre nach Anspruch 2, **dadurch gekennzeichnet, dass** die Einsteckbohrungen (50, 51; 52, 53) auf beiden Seiten der Bohrerführungsbohrung (5, 6) den gleichen Abstand von der Bohrerführungsbohrung (5, 6) aufweisen.

4. Dübellehre nach einem der vorstehenden Ansprüche, **dadurch gekennzeichnet, dass** der erste Schenkel (3) länger ausgebildet ist als der zweite Schenkel (4).

5. Dübellehre nach einem der vorstehenden Ansprüche, **dadurch gekennzeichnet, dass** die Bohrerführungsbohrung (5) und die Einsteckbohrung (en) (50, 51), in dem ersten Schenkel (3) von dessen benachbarter Längskante (17) einen Abstand (b) aufweisen, der dem Abstand (a) zwischen der Ecke (21) des Winkelprofils (2) und der Bohrerführungsbohrung (6) und der bzw. den Einsteckbohrungen (52, 53) in dem zweiten Schenkel (4) entspricht.

6. Dübellehre nach einem der vorstehenden Ansprüche, **dadurch gekennzeichnet, dass** die Bohrerführungsbohrung (5) in dem ersten Schenkel (3) in Längsrichtung in der Mitte zwischen der Winkelprofilkante (20) und dem Ende des ersten Schenkels (3) angeordnet ist.

7. Dübellehre nach einem der vorstehenden Ansprüche, **dadurch gekennzeichnet, dass** die Bohrerführungsbohrung (6) in dem zweiten Schenkel (4) in Querrichtung in der Mitte angeordnet ist.

8. Dübellehre nach Anspruch 1, **dadurch gekennzeichnet, dass** der Einsteckbolzen (54) einen Kopf (55) zum Anschlag an der Außenseite der Schenkel (3, 4) aufweist.

9. Dübellehre nach einem der vorstehenden Ansprüche, **dadurch gekennzeichnet, dass** zum Bohren eines Lochs für einen Korpusverbinder in dem ersten Schenkel (3) in Querrichtung in der Mitte eine Kunstbohrerführungsbohrung (58) vorgesehen ist.
